Europäisches Patentamt

European Patent Office

Office européen des brevets

(11) Veröffentlichungsnummer: **0 220 553 B1**

(12) **EUROPÄISCHE PATENTSCHRIFT**

(45) Veröffentlichungstag der Patentschrift: **18.12.91**

(51) Int. Cl.5: **C04B 33/32, F27B 9/04**

(21) Anmeldenummer: **86113903.8**

(22) Anmeldetag: **07.10.86**

(54) **Verfahren zum Behandeln von oxidierbare bzw. reduzierbare Substanzen enthaltenden Materialien.**

(30) Priorität: **12.10.85 DE 3536532**

(43) Veröffentlichungstag der Anmeldung:
**06.05.87 Patentblatt 87/19**

(45) Bekanntmachung des Hinweises auf die
Patenterteilung:
**18.12.91 Patentblatt 91/51**

(84) Benannte Vertragsstaaten:
**DE ES FR GB IT**

(56) Entgegenhaltungen:
**EP-A- 0 021 768**
**EP-A- 0 059 849**
**US-A- 1 528 401**

(73) Patentinhaber: **Linde Aktiengesellschaft**
**Abraham-Lincoln-Strasse 21**
**W-6200 Wiesbaden(DE)**

(72) Erfinder: **Vocke, Peter, Dr.-Ing.**
**Merzstrasse 6**
**W-8000 München 80(DE)**

(74) Vertreter: **Schaefer, Gerhard, Dr.**
**Linde Aktiengesellschaft Zentrale Patentab-**
**teilung**
**W-8023 Höllriegelskreuth(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zum Brennen von Brenngut im Schnellbrennverfahren, wobei das Brenngut farbgebende, oxidierbare oder reduzierbare Substanzen enthält und wobei das Brenngut aufgeheizt, gebrannt und nachfolgend in einer Kühlzone in direktem Wärmetausch mit einem Kühlgas gekühlt wird.

Zum Brennen von beispielsweise Ziegeln, Klinker oder sonstigem grob- und feinkeramischem Material werden diese Materialien häufig in einem Tunnelofen behandelt. Die Ton- und Keramikwaren werden zu Stapeln zusammengefaßt, die auf Wagen errichtet werden. Die Wagen werden in einer Reihe durch den Tunnelofen geleitet. Im Tunnelofen durchlaufen die Ton- oder Keramikwaren zunächst eine Vorheizzone, in der ihre organischen Substanzen oxidiert werden. Nachfolgend durchlaufen die Waren eine Brennzone, in der die Ton- oder Keramikwaren die höchste Temperatur annehmen. Anschließend gelangen sie in eine Kühlzone, in die häufig Luft zur Kühlung eingeleitet wird.

Die Farbe der fertiggestellten Ton- und Keramikwaren ist vom Oxidations- bzw. Reduktionsgrad der im Brenngut enthaltenen farbgebenden Substanzen abhängig. Eine große Rolle spielt dabei Eisenoxid, dessen Farbe von der Wertigkeit des Eisens abhängt, welche wiederum durch eine reduzierende oder oxidierende Atmosphäre im Ofen gezielt beeinflußt werden kann.

In der US-PS 1,528,401 wird ein Verfahren beschrieben, das ermöglicht, Tonwaren und Ziegeln durch eine geeignete Gasatmosphäre im Ofen eine bestimmte Farbtönung zu geben. Dabei wird die beim Langzeitbrand entstehende Gasatmosphäre aus der Vorheiz- oder Brennzone, die im allgemeinen einen Sauerstoffgehalt unter 10 Vol-% besitzt, abgezogen und über eine Zirkulationsvorrichtung in die Kühlzone der Ofenanlage geleitet. Dieser Gasatmosphäre kann dabei noch eine bestimmte Sauerstoffmenge zugesetzt werden, um die reduzierenden Eigenschaften dieser Atmosphäre beeinflussen zu können. Eine zusätzliche Reduktion der im Brenngut enthaltenen reduzierbaren Substanzen beim Kühlvorgang ist hier erwünscht, da beim Langzeitbrennverfahren naturgemäß das Brenngut einen geringen Reduktionsgrad besitzt, und die Farbe der Ton- und Keramikwaren durch diese Reduktion positiv beeinflußt werden kann.

Eine erhöhte Qualität und ein verbessertes Aussehen von Ton- und Keramikwaren wird gemäß der EP-A-0 021 768 dadurch erzielt, daß in die Brennzone des Ofens sauerstoffreiches Gas eingeleitet wird. Dadurch soll an einer bestimmten Stelle in der Brennzone, die das Brenngut durchläuft, der Sauerstoffgehalt der Atmosphäre angehoben werden, um kohlenstoff- und eisenhaltige Substanzen gezielt oxidieren zu können. In der Kühlzone beträgt der Sauerstoffgehalt etwa 21 %, die Kühlung erfolgt hier mit Atmosphärenluft aus der Umgebung.

In letzter Zeit wird beim Herstellen von Tonund Keramikwaren, insbesondere bei Steinzeugfliesen, in den meisten Betrieben auf die Technologie des Schnellbrandes umgestellt. Hierbei durchlaufen die Waren einen Ofen hintereinanderliegend in wesentlich kürzerer Zeit als beim herkömmlichen Langzeitbrennverfahren. Meist werden die Materialien in der Heizzone direkt oder indirekt mit Gas- oder Gas-Luftgemisch-Feuerung gebrannt, wobei der Sauerstoffgehalt der Atmosphäre in der Brennzone meist sehr niedrig liegt (ca. 2 bis 5 Vol-%).

Die Ton- und Keramikwaren nehmen beim Schnellbrandverfahren eine andere Farbe an als beim Langzeitbrennverfahren. Steinzeugfliesen, die beispielsweise nach einem Langzeitbrand aufgrund der geringen Reduktion des Eisenoxids ein helles Rot zeigen, nehmen im Schnellbrand dagegen aufgrund starker Reduktion des Eisenoxids eine dunkelgraurote Farbe an. Dieser Effekt ist unerwünscht.

Der Erfindung liegt die Aufgabe zugrunde, ein Verfahren zum Brennen von Brenngut im Schnellbrennverfahren anzugeben, durch das die Farbe des Brennguts beeinflußt werden kann.

Die Aufgabe wird erfindungsgemäß dadurch gelöst, daß der Kühlzone des Ofens ein Kühlgas mit 25 bis 100 Vol-% Sauerstoffgehalt zugeführt wird.

Im Unterschied zu herkömmlichen Verfahren dient beim erfindungsgemäßen Verfahren nicht Luft als Kühlgas, sondern ein Gas, das einen höheren Sauerstoffgehalt als Luft hat. Der Erfindung liegt die Erkenntnis zugrunde, daß die endgültige Farbe von oxidierbare bzw. reduzierbare Substanzen enthaltenden Materialien nach der Heizzone in der Kühlzone entsteht und dort beeinflußbar ist.

So zeigten beispielsweise unglasierte Fliesen, die oxidierbare bzw. reduzierbare, farbgebende Substanzen enthalten, bisher nach einem Schnellbrand eher die Farben des reduzierten Zustandes. Eine oxidierbare bzw. reduzierbare, farbgebende Substanz ist dabei meist Eisenoxid.

In der Heizzone des Ofens wird durch hohe Temperatur und niedrigen Sauerstoff-Partialdruck eine reduzierte Form von Eisenoxid bzw. deren Verbindungen von zweiwertigem Eisen gebildet. Diese Verbindungen sind selbst schwarz und färben eine Fliese folglich dunkel. Dabei entfällt der rotfärbende Eisen-III-Oxidanteil.

Durch Einsatz von Luft in der Kühlzone eines konventionellen Langzeitbrandofens wurde eine derartige Dunkelfärbung durch Reoxidation der Eisen-II-Verbindungen zu rotfärbendem Eisen-III-Oxid behoben. Ein vergleichbarer Effekt tritt z.B. in der Sturzkühlung eines Schnellbrandofens nicht ein. In der Sturzkühlung wird in der Regel Luft auf die zu kühlenden Materialien geblasen und nach dem Wärmetausch mit den Materialien aus dem Ofen abgezogen.

Erfindungsgemäß wurde festgestellt, daß bei einer raschen Abkühlung von Materialien wie in der Sturzkühlung eines Schnellbrandofens durch ein erhöhtes sauerstoffangebot eine Beschleunigung der Reoxidation bewirkt wird. Dieser Effekt war überraschend, da bei Lufteindüsung in der Sturzkühlung ohnehin ein relativ hoher Sauerstoffgehalt von ca. 21 Vol-% vorliegt. Der mit einem erhöhten Sauerstoffangebot verbundene Effekt ist nicht erwartet worden. Anscheinend ist bei einer raschen Kühlung wie in der Sturzkühlung beim Schnellbrand für eine ausreichende Reoxidation zu wenig Zeit. Ein wesentliches Merkmal der Erfindung ist daher, daß die Verwendung eines Kühlgases mit einem über 21 Vol-% liegenden Sauerstoffgehalt eine Beschleunigung der Reoxidation bewirkt.

Eine besonders rasche Reoxidation kann durch Verwendung reinen Sauerstoffs als Kühlgas erzielt werden.

Auf diese Weise kann z.B. jetzt auch beim Schnellbrand von Fliesen mit Eisenoxid als farbbestimmender Substanz ein helles Rot erzielt werden, oder bei beispielsweise im Langzeitbrand gelb gefärbten Fliesen der im Schnellbrand entstehende olivgrüne Farbton in Richtung beigegelb abgeändert werden.

Nach einer Ausgestaltung der Erfindung besteht das Kühlgas aus sauerstoffangereicherter Luft. Der Sauerstoff kann dabe der Luft vor dem Einleiten in den Ofen aber auch erst innerhalb des Ofens zugemischt werden. Im letztgenannten Fall kann der Sauerstoff z.B. über Lanzen direkt im Bereich der Kühlluftzufuhr in den Ofen geleitet werden.

Eine homogene Färbung der Materialien wird in einer Variante der Erfindung erzielt, wenn der Sauerstoffgehalt des Kühlgases konstant gehalten wird.

In einer anderen Variante der Erfindung können Farbschwankungen erzielt werden. Dazu wird vorteilhafterweise der Sauerstoffgehalt des Kühlgases variiert.

Bisher wurde Sauerstoff in der Vorwärmzone unter anderem zur Beseitigung schwarzer Kerne eingesetzt, sowie in Brennern zur Optimierung der Verbrennung bzw. der Brennkurve. Die Verwendung eines Kühlgases mit einem höheren Sauerstoffgehalt als Luft in der Sturzkühlung kann in Kombination mit einem Sauerstoffeinsatz in der Vorwärmzone erfolgen. Damit besteht die Möglichkeit der Beeinflussung von schwarzen Kernen und von der Farbe der Materialien mit einer Anlage.

Das erfindungsgemäße Verfahren kann vorteilhafterweise bei jedem keramischen Produkt, das seine Farbgebung über oxidierbare bzw. reduzierbare Substanzen erhält, verwendet werden. Wegen der oben geschilderten Situation beim Schnellbrand derartiger Materialien ist die Anwendung des erfindungsgemäßen Verfahrens auf die Herstellung dieser Materialien im Schnellbrandverfahren besonders vorteilhaft.

**Patentansprüche**

1.  Verfahren zum Brennen von Brenngut im Schnellbrennverfahren, wobei das Brenngut farbgebende, oxidierbare oder reduzierbare Substanzen enthält und wobei das Brenngut aufgeheizt, gebrannt und nachfolgend in einer Kühlzone in direktem Wärmetausch mit einem Kühlgas gekühlt wird, dadurch gekennzeichnet, daß der Kühlzone ein Kühlgas mit 25 bis 100 Vol-% Sauerstoffgehalt zugeführt wird.

2.  Verfahren nach Anspruch 1, dadurch gekennzeichnet, daß als Kühlgas sauerstoffangereicherte Luft verwendet wird.

3.  Verfahren nach einem der Ansprüche 1 oder 2, dadurch gekennzeichnet, daß der Sauerstoffgehalt des Kühlgases konstant gehalten wird.

4.  Verfahren nach einem der Ansprüche 1 oder 2, dadurch gekennzeichnet, daß der Sauerstoffgehalt des Kühlgases variiert wird.

**Claims**

1.  A process for firing combustible material in accordance with the fast firing method wherein the material to be fired contains colour-bearing, oxidizable or reducible substances and wherein the material to be fired is heated, fired and then cooled in a cooling zone in direct heat exchange with a cooling gas, characterised in that a cooling gas containing 25 to 100 vol% oxygen is supplied to the cooling zone.

2.  A process as claimed in Claim 1, characterised in that air enriched with oxygen is used as cooling gas.

3.  A process as claimed in Claim 1 or 2, characterised in that the oxygen content of the cooling gas is maintained constant.

4.  A process as claimed in Claim 1 or 2, characterised in that the oxygen content of the cooling gas is varied.

**Revendications**

1. Procédé de cuisson de matériaux à cuire dans un procédé de cuisson rapide, les matériaux à cuire contenant des substances colorantes oxydables ou réductrices et les matériaux à cuire étant chauffés, cuits et ensuite refroidis dans une zone de refroidissement par échange de chaleur directe avec un gaz de refroidissement, caractérisé en ce que dans la zone de refroidissement, on introduit un gaz de refroidissement dont la teneur en oxygène est comprise entre 25 et 100% en volume.

2. Procédé selon la revendication 1, caractérisé en ce que l'on utilise comme gaz de refroidissement de l'air enrichi en oxygène.

3. Procédé selon l'une quelconque des revendications 1 ou 2, caractérisé en ce que l'on maintient constante la teneur en oxygène du gaz de refroidissement.

4. Procédé selon l'une des revendications 1 ou 2, caractérisé en ce que l'on fait varier la teneur en oxygène du gaz de refroidissement.